# EUROPEAN PATENT SPECIFICATION

(11) **EP 4 138 024 B1**
(45) Date of publication and mention of the grant of the patent: **19.02.2025**
(21) Application number: 21817495.1
(22) Date of filing: 14.05.2021
(51) Int. Cl.: G06Q 10/101

(54) **INFORMATION PROCESSING DEVICE, INFORMATION PROCESSING PROGRAM, AND CARRIER MEDIUM**
INFORMATIONSVERARBEITUNGSVORRICHTUNG, INFORMATIONSVERARBEITUNGSPROGRAMM UND TRÄGERMEDIUM
DISPOSITIF DE TRAITEMENT D'INFORMATIONS, PROGRAMME DE TRAITEMENT D'INFORMATIONS ET SUPPORT DE PORTEUSE

(30) Priority: 30.05.2020 JP 2020095138
(43) Date of publication of application: 22.02.2023
(73) Proprietor: W&W Co., Ltd., Tokyo 131-0032 (JP)
(72) Inventor: WATANABE Kazuhiro, Tokyo 131-0032 (JP)
(74) Representative: Cabinet Netter
(86) International application number: PCT/JP2021/018322
(87) International publication number: WO 2021/246132

(56) References cited:
- JP-A- 2002 157 412
- JP-A- 2004 046 876
- JP-A- 2009 169 914
- US-A1- 2013 247 221
- US-A1- 2015 095 426

## Description

### [Technical Field]

The present invention relates to an information processing device, an information processing program, and a supporting medium for a so-called SNS server that provides a social networking service (SNS) via a network.

### [Background Art]

Social networking services (SNS) provided over a network such as the internet are widely used. An SNS is a community-type website where subscribers (users) exchange information such as texts and images with each other. The types of SNS include weblogs (also known as "blogs") where opinions and impressions are expressed in diary form and viewers add their impressions in a comment section, electronic bulletin boards (known as a bulletin board system or BBS) used to exchange information between users, and group chat. In recent years, a type of SNS known as "business chat", which is suitable for collaboration, has become more popular. Business chat is a type of group chat characterized by a "task management" function that can be used to manage the progress of projects undertaken by members belonging to the group.

On an SNS, browsing controls that make information such as texts and images posted bv users either available to all users or only to some users has been performed conventionally.

Document JP 2009 169114 discloses a service providing method which provides registered users with a virtual communication service that enables information exchange within a group to which multiple users, called members, belong.

Document JP 2002 157412 refers to a method for implementing ideas to applications provided with the process of collecting various ideas from the public and making the collected ideas perusable only for the person desiring to invest under a confidentiality duty contract.

For example, Patent Document 1 discloses a technique that allows users to specify the available range of texts on a bulletin board system.

Patent Document 2 discloses a technique that allows users to set levels of friendship (friendship levels) for each registered member and allowing only data that corresponds to each friend level to be viewed, thus setting flexible access restrictions on data published on an SNS.

Patent Document 3 discloses a technique for an SNS used by medical personnel that can keep certain portions of entered information private.

### [Citation List]

### [Patent Literature]

[Patent Document 1] JP 2007-072698 A
[Patent Document 2] JP 5492370 B2
[Patent Document 3] JP 2013-161103 A

### [Summary of Invention]

### [Technical Problem]

In order to promote business, it would be advantageous in terms of quality and cost to solicit a wide range of advice and proposals in highly specialized fields such as industrial property rights over networks. However, some business ideas and information have to be kept confidential from other members. For example, "novelty", a requirement for a "patentable invention", is lost when the invention becomes known to others who are not obligated to maintain confidentiality.

However, no prior art technique, including those disclosed in the documents mentioned above, make it possible for confidential information to be available only to users who have signed a confidentiality agreement in advance.

Therefore, the information posted on an SNS can be viewed by users who are not obligated to maintain confidentiality, and so "novelty", a requirement for a "patentable invention", and "confidentiality", which is a requirement for "trade secrets" under the Unfair Competition Prevention Act, can be lost.

It is an object of the present invention to solve this problem by providing an SNS that enables users to solicit advice and proposals regarding inventions (including know-how, utility models, and designs) and trade secrets (including names, trademarks, marks, domain names, etc.) without loss of "novelty" or "trade secrets" as mentioned above.

### [Solution to Problem]

The present invention is an information processing device comprising a subscribing means for adding user subscriptions to an SNS and a confidentiality acceptance/rejection selecting means for accepting or rejecting a confidentiality obligation imposed on information disclosed on the SNS when the subscribing means is used to add a subscription, wherein the information processing device performs information processing enabling the display of messages posted on the SNS, in whole or in part, only to the administrator of the SNS, to the poster of the message, and to registered users who have consented to the fact that confidentiality has been imposed via the confidentiality acceptance/rejection selecting means.

### [Brief Description of Drawings]

[Fig. 1]

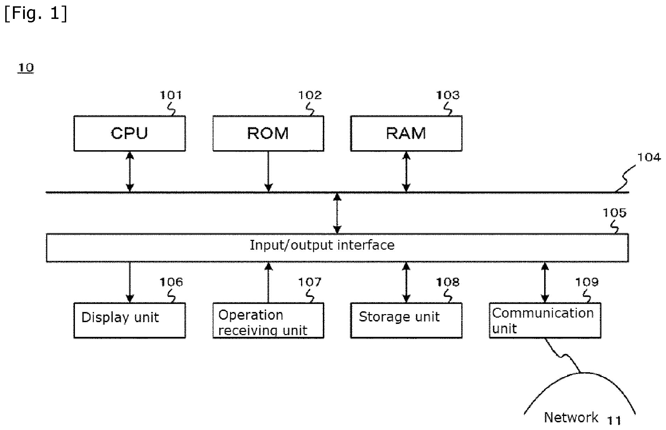

   Fig. 1 is a diagram showing the hardware configuration of the SNS server 10.
[Fig. 2]

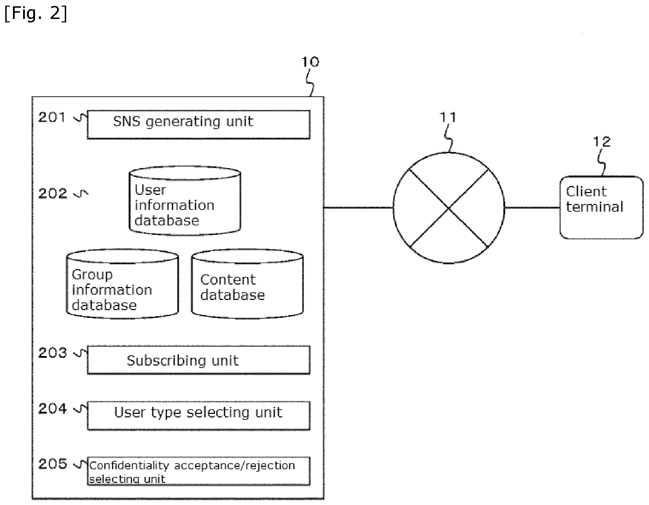

   Fig. 2 is a block diagram showing the functional structure of an information processing device of the present invention.
[Fig. 3]

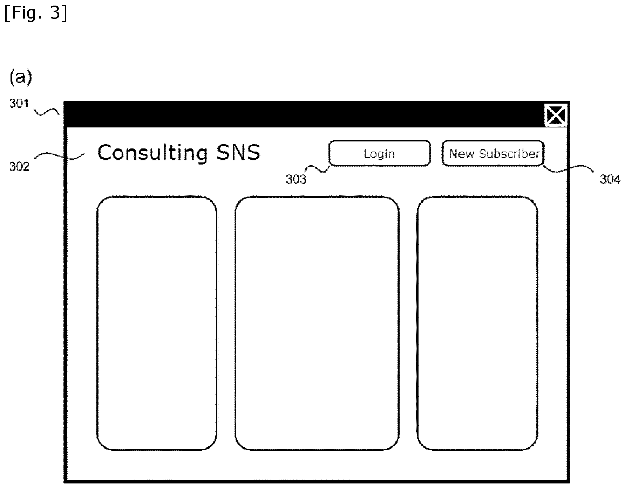

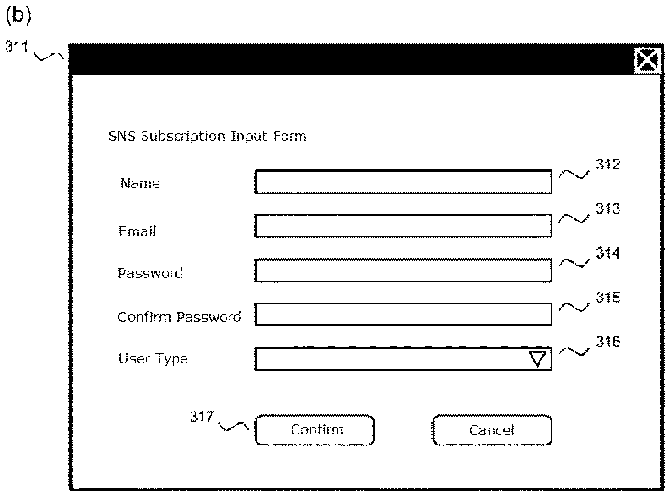

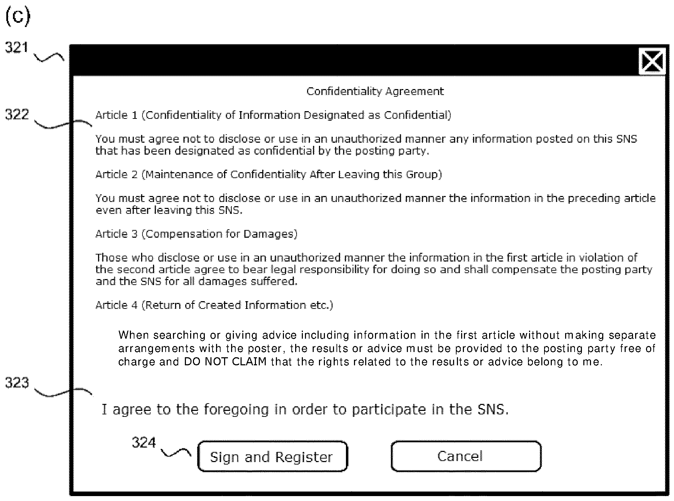

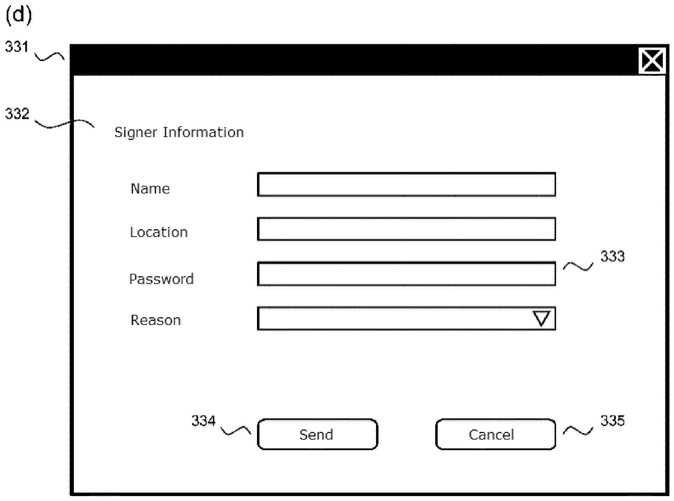

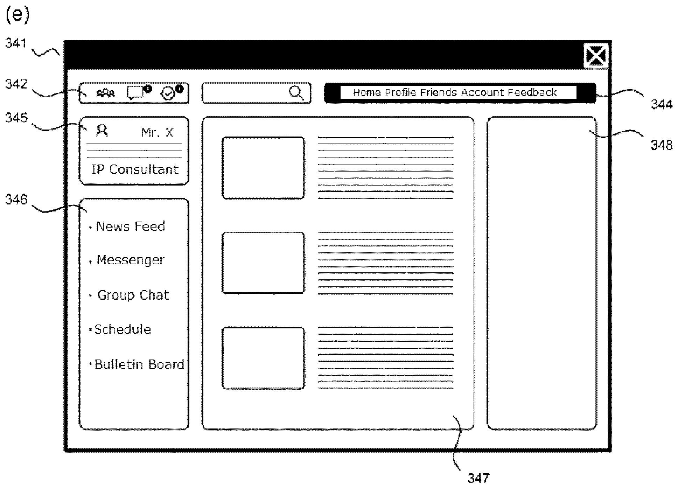

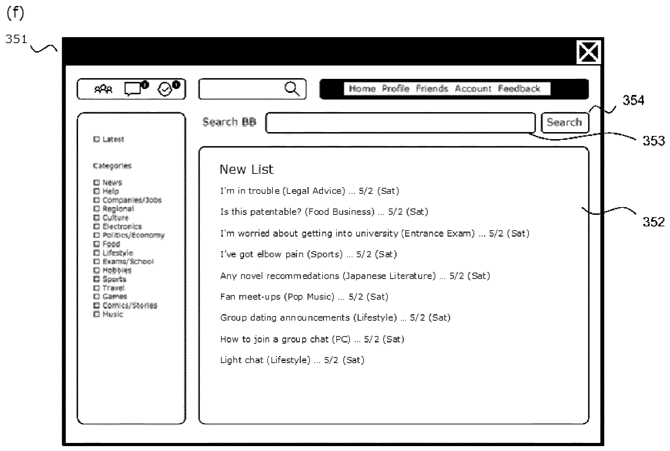

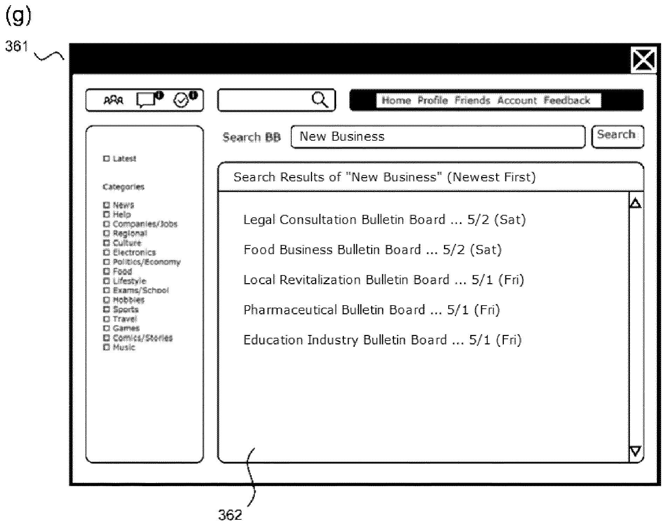

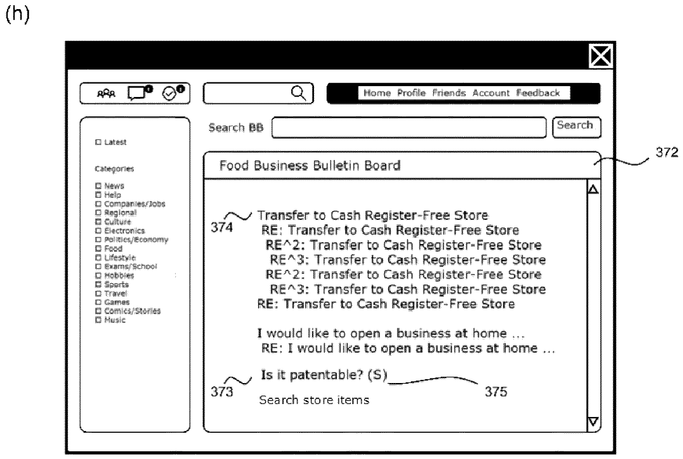

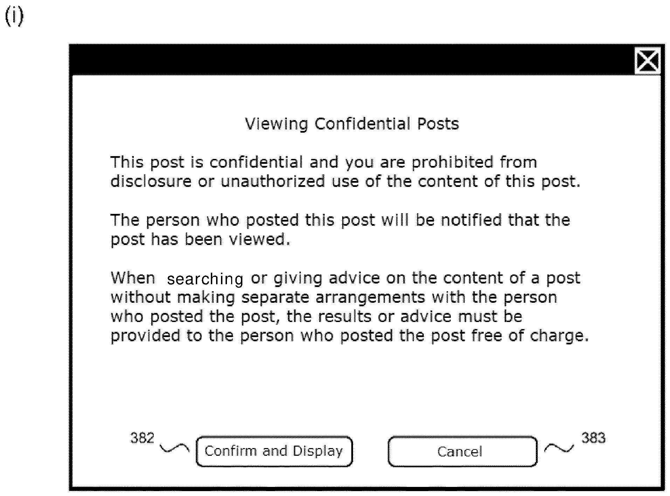

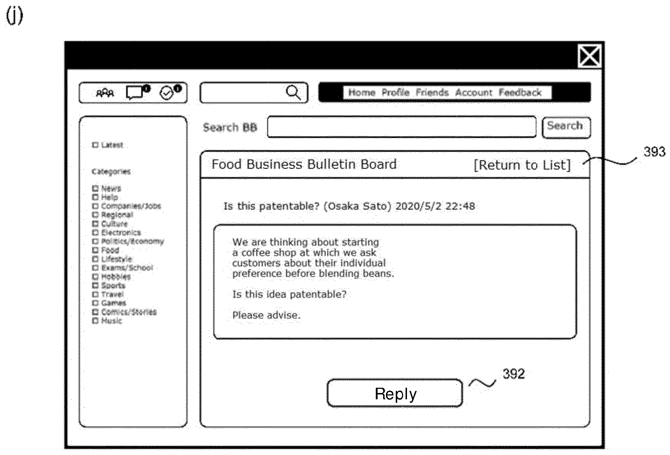

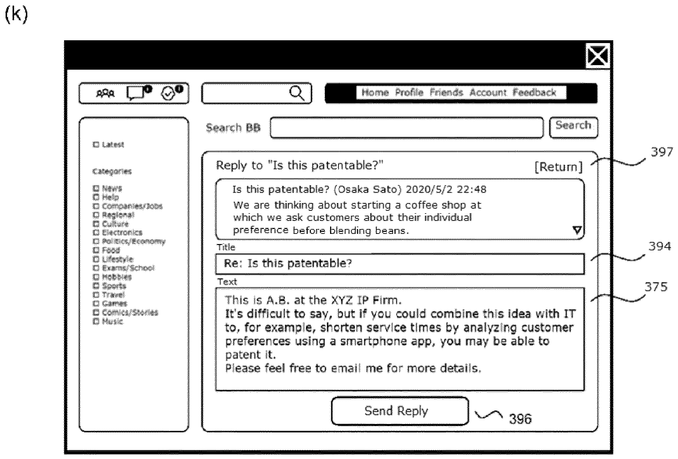

   Fig. 3 is a diagram showing examples of screens that the SNS server 10 displays on a client terminal 12.
[Fig. 4]

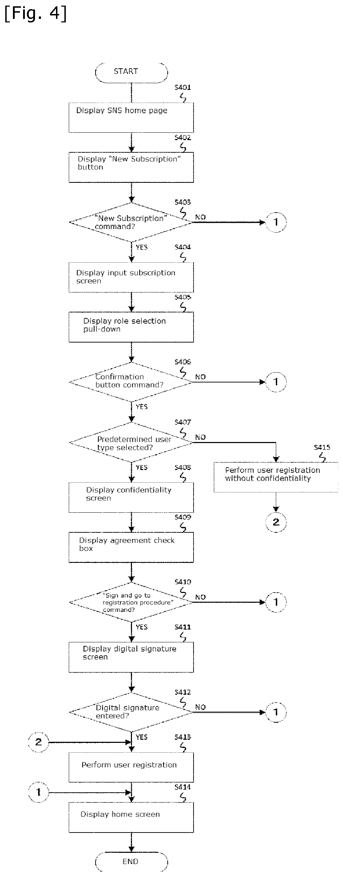

   Fig. 4 is a flowchart of the processing performed to display the fact that a confidentiality obligation has been imposed on the information disclosed on the SNS and to allow approval or disapproval to be selected.
[Fig. 5]

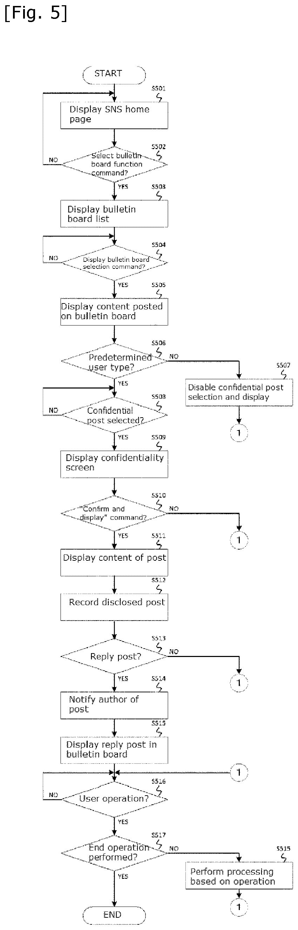

   Fig. 5 is a flowchart of the processing performed to display the fact that a confidentiality obligation has been imposed and to display the content when content designated as confidential has been selected.
[Fig. 6]

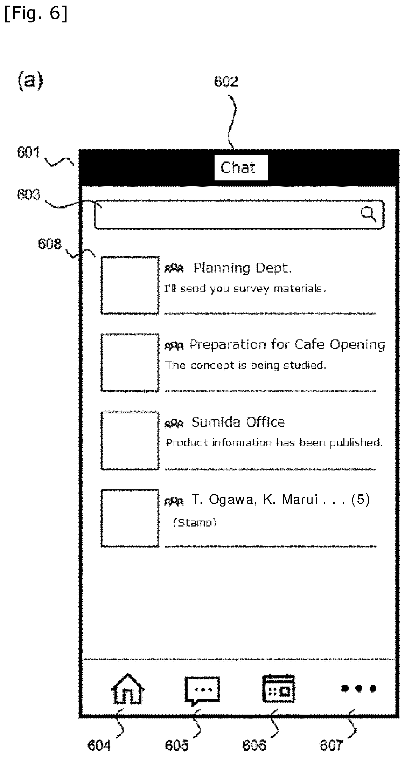

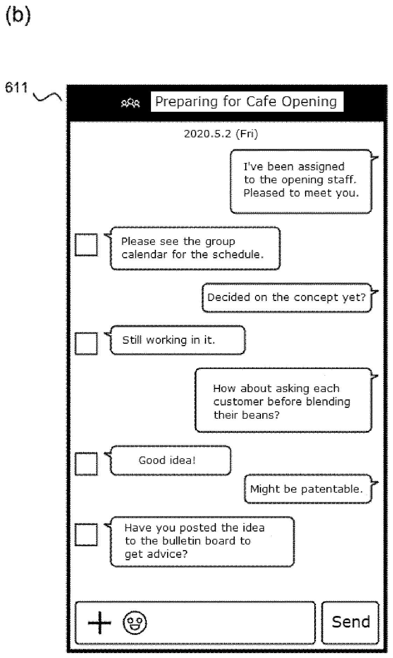

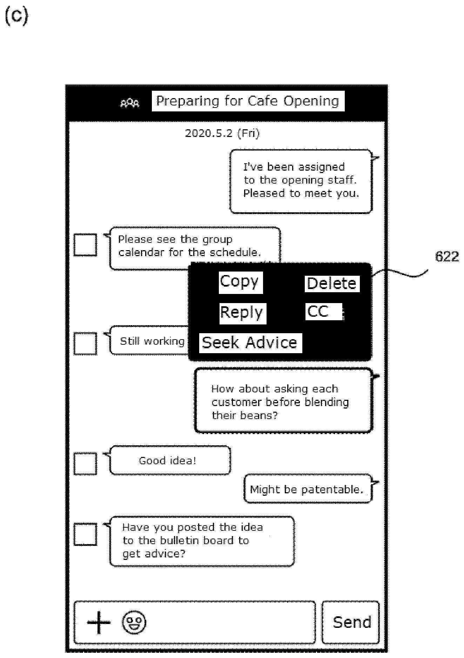

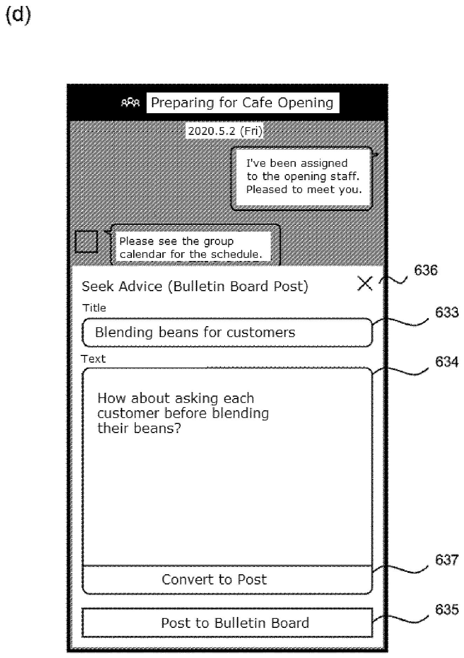

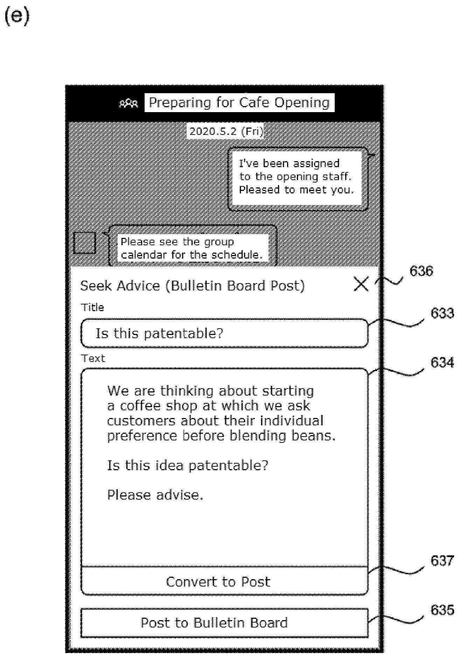

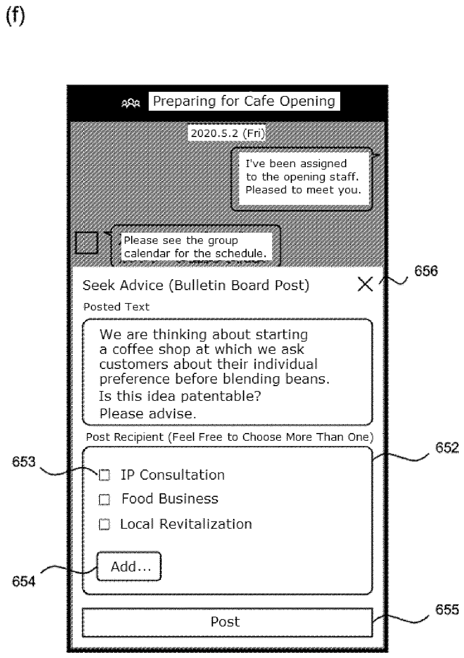

   Fig. 6 is a diagram showing an example of a group chat screen displayed by the SNS server 10 on a client terminal 12.
[Fig. 7]

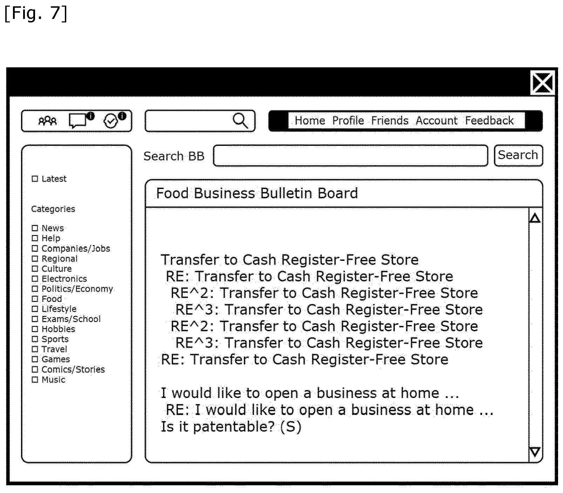

   Fig. 7 is a diagram showing how a post designated as confidential appears on the bulletin board from a group chat.
[Fig. 8]

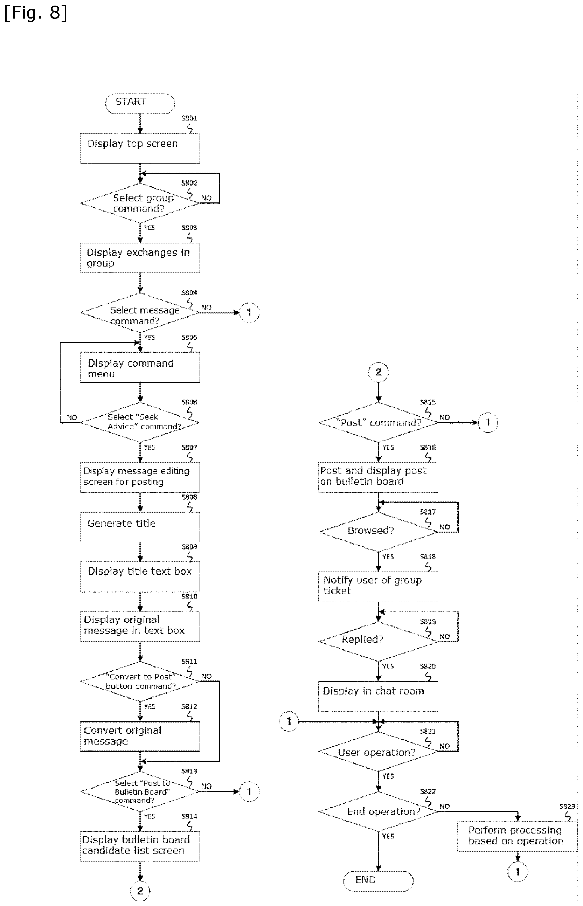

   Fig. 8 is a flowchart of processing performed to display a reply comment made to a post posted on the bulletin board from a group chat as a message in the group chat.
[Fig. 9]

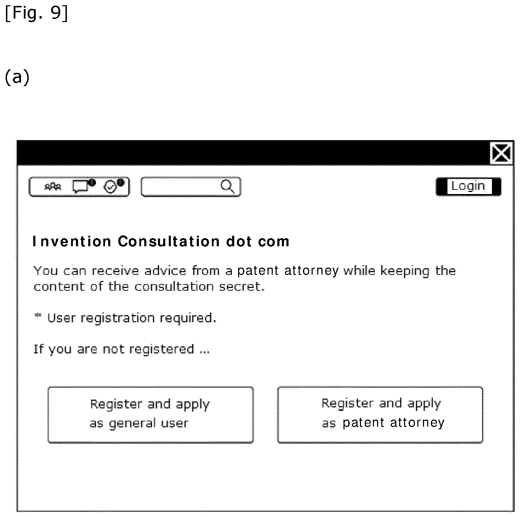

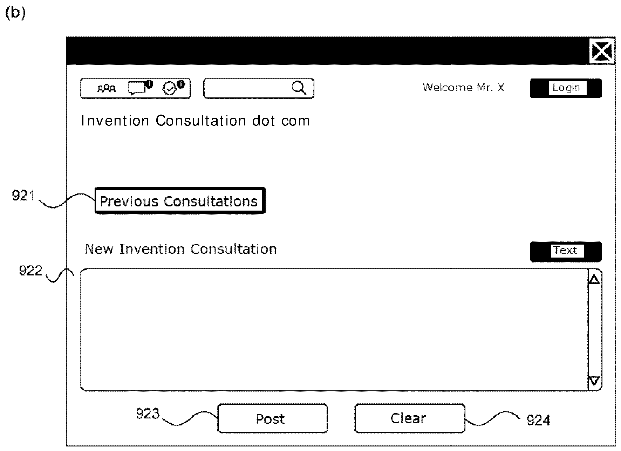

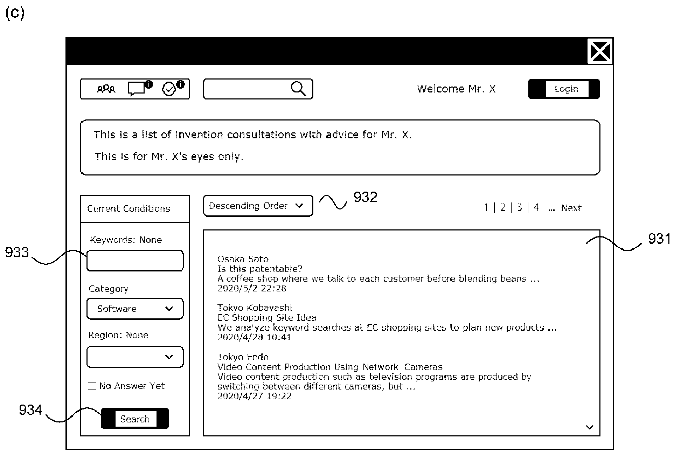

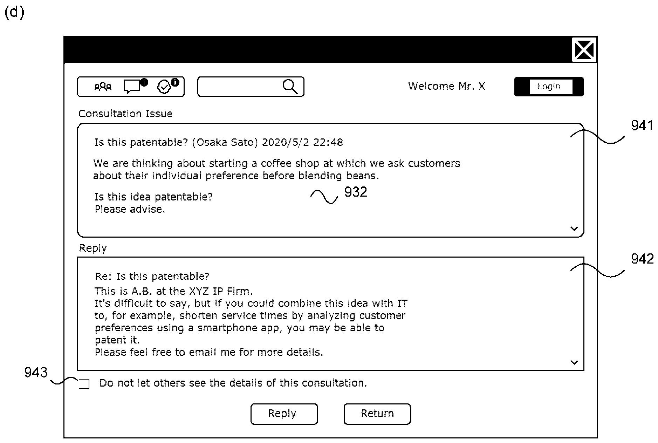

   Fig. 9 is an example of display screens from an SNS that specializes in "invention consultation."
[Fig. 10]

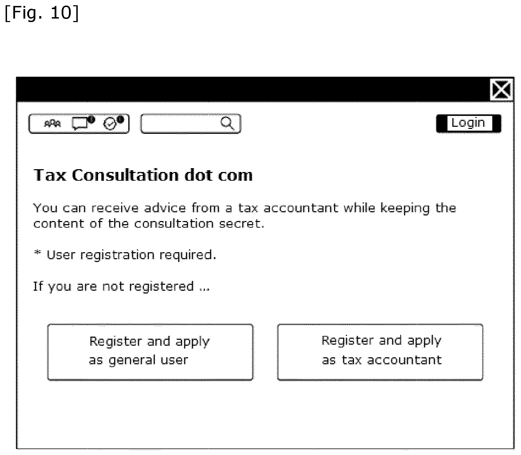

   Fig. 10 is an example of display screens from an SNS that specializes in "tax consultation."

### [Description of Embodiments]

The following is a description of the best mode for embodying the invention with reference to the drawings.

### [Examples]

### (Example 1)

The information processing device in the present embodiment of the invention is configured as a computer system in which information processing by an application program is realized using hardware resources centered on an SNS server 10.

Fig. 1 is a diagram showing the hardware configuration of the SNS server 10.

As shown in Fig. 1, the SNS server 10 includes a central processing unit (CPU) 101, a read- only memory (ROM) 102, a random access memory (RAM) 103, an input/output interface 105, and a bus 104 that connects these components to each other.

The CPU 101 controls the SNS server 10 while performing various arithmetic operations. ROM 102 securely stores firmware such as the operating system (OS), programs, and parameters to be executed by CPU 101. The RAM 103 is used as a workspace for the CPU 101, etc., and temporarily holds the OS, running applications, and data being processed.

A display unit 106, an operation receiving unit 107, a storage unit 108, and a communication unit 109, etc. are connected to the input/output interface 105.

The display unit 106 can be a display device such as a liquid crystal display (LCD), an organic electroluminescence display (OELD), or a cathode ray tube (CRT).

The operation receiving unit 107 is an input device such as a pointing device (a mouse, etc.), a keyboard, or a touch panel. When the operation receiving unit 107 is a touch panel, it can be integrated into the display unit 106.

The storage unit 108 can be, for example, a hard disk drive (HDD), a flash memory, or some other type of solid-state memory. In addition to the OS and applications, the storage unit 108 stores the data managed in databases (the user information database, grouping information database, content database, etc.) described later.

The communication unit 109 is a network interface card (NIC) or a wireless communication unit for connecting to the network 11 that communicates with client terminals 12. The client terminals 12 can be, for example, personal computers, smartphones, smartwatches, smart glasses, tablets, and music players.

Fig. 2 is a block diagram showing the functional structure of an information processing device of the present invention.

In Fig. 2, the SNS server 10 used to provide and manage the SNS is connected to a network 11 such as the internet. Client terminals 12 are also connected to the network 11, and the SNS server 10 displays an SNS such as a weblog, an electronic bulletin board, or a group chat on the client terminals 12 via the network 11.

A SNS generating unit 201 is a functional module for generating an SNS to be displayed on client terminals 12, and may have, for example, a weblog generating unit, an electronic bulletin board generating unit and/or a group chat generating unit.

Databases 202 store the data constituting the SNS, and may include a user information database, a group information database and/or a content database.

The user information database stores authentication information (user IDs, passwords, etc.) and profile information on SNS users, as well as remark history information indicating the history of remarks and comments made by users. Profile information includes the names, roles, access rights, qualifications, and ratings etc. of users. These are examples, and others include, for example, the face photos, genders, addresses, and contact information of users.

The group information database may store, for example, authentication information (user IDs, passwords) of members of an SNS user group, profile information on the users, and information on functions available to group members. Profile information includes the name and position of a group, the purpose and character (nature) of the group, user roles in the group, and group management authority, etc.

The content database may include bulletin board objects, thread objects, and message objects, etc. The bulletin board objects have the bulletin board ID and bulletin board title as attributes, and are associated with thread objects. The thread objects have a thread ID as an attribute and are associated with message objects. The message objects have a message ID, a username, a category, a message title, a message body, a posting date and time, and viewing authority, etc. as attributes, and are associated with a comment (reply) post. A comment (reply) post is also a message object.

A subscribing unit 203 is a functional module that allows users of client terminals 12 to subscribe to the SNS.

The user type selecting unit 204 is a function module that allows users to select a user type when the subscribing unit 203 is used to subscribe.

A confidentiality obligation acceptance/rejection selecting unit 205 is a functional module that indicates to the user that a confidentiality obligation has been imposed on information disclosed on the SNS and allows the user to accept or reject this obligation when a predetermined user type has been selected using the user type selecting unit 204.

Fig. 3 shows examples of screens displayed on client terminals 12 by the SNS server 10 of the present invention when a user subscribes to (registers with) the SNS. These screens are displayed on the display unit of a client terminal 12 using an application such as a web browser on the client terminal 12 that references data such as HTML (Hyper Text Markup Language) generated by the SNS server 10.

When the web browser is launched on the client terminal 12 and the URL (Uniform Resource Locator) indicating the top page of the SNS is entered, the SNS server 10 displays the top screen such as the one indicated by 301 on the client terminal (Fig. 3 (a)).

The top screen 301 has the SNS name 302 as well as a "new subscriber" button 304 and a "login" button 303.

When the user presses the "new subscriber" button 304, a transition to the screen in Fig. 3 (b) occurs.

Fig. 3 (b) shows the SNS subscription screen 311. The subscription screen 311 has a username input portion 312, an email address input portion 313, a password input portion 314, a password confirmation input portion 315, a user role selection pull-down menu 316, and a confirmation button 317.

When, for example, "IP consultant (patent attorney, etc.)" is selected in the user role selection pull-down menu 316, a username is entered in the username input portion 312, and the confirmation button 317 is pressed, a transition to the screen in Fig. 3 (c) occurs.

Fig. 3 (c) shows the screen indicating that a confidentiality obligation has been imposed on information disclosed on the SNS and allowing the user to either approve or reject the obligation when a user role such as "IP consultant (patent attorney, etc.)" has been selected. This screen has a confidentiality obligation displaying portion 322, a consent check box 323, and a "sign and register" button 324. The "sign and register" button 324 is enabled (rendered user-operable) after the consent check box 323 has been checked.

When the consent check box 323 has been checked by the user and the "sign and register" button 324 has been pressed, a transition to the screen in Fig. 3 (d) occurs.

Fig. 3 (d) shows the digital signature screen 331. The digital signature screen 331 has a signer information display portion 332, a password input portion 333, a "send" button 334, and a "cancel" button 335. The digital signature screen 331 is displayed by an external authentication server connected by the web browser in the client terminal 12 that references a URL (Uniform Resource Locator) registered at the SNS server 10.

When a password has been inputted in the password input portion 333 by the user and the "send" button 334 is pressed, a transition to the screen shown in Fig. 3 (e) occurs.

Fig. 3 (e) shows the SNS home screen 341. The home screen 341 has a notification unit 342 that displays the number of new items such as messages and friend requests, a search box 343, a setting menu for account settings 344, a user profile display portion 345, a function menu for displaying SNS functions 346, and an update information display portion 347 that displays SNS update information, and a section display portion 348 that displays event schedules, advertisements, etc.

The user profile display portion 345 displays the user role selected when the user subscribed to the SNS. This is so the user can confirm which user type he or she has assumed is in a timely manner.

When the user selects "bulletin board" from the function menu 346, a transition to the screen in Fig. 3 (f) occurs.

Fig. 3 (f) shows a list of bulletin boards hosted on the SNS 351. The bulletin board list 351 has a new post list 352, a bulletin board search box 353, and a "search" button 354.

When the user, for example, enters "new business" in the bulletin board search box 353 and presses the "search" button 354, a transition to the screen shown in Fig. 3 (g) occurs.

In Fig. 3 (g), a list 362 of bulletin boards retrieved using the keyword "new business" is displayed. When one of the bulletin boards displayed in the list 362 (for example, the "food business bulletin board") is selected by the user, a transition to the screen shown in Fig. 3 (h) occurs.

In Fig. 3 (h), the "food business bulletin board" 372 is displayed as a thread. The initial posts and the comment posts attached to then, which are independent of the thread display, are displayed in a branched grouping. There are posts that are designated as confidential (for example, post 373) and those that are not (for example, post 374), and the former is assigned an icon 375 indicating that it has been designated as confidential. Posts that have been designated as confidential may be displayed as though they cannot be selected, for example, grayed out, or may not be displayed at all to users registered with a user type other than specified user types, such as "IP consultants (patent attorneys, etc.)."

When a user registered as a predetermined user type such as "IP consultant (patent attorney, etc.)" selects post 373, which is designated as confidential, a transition to the screen in Fig. 3 (i) occurs.

Fig. 3 (i) is a screen that reminds the user that a confidentiality obligation has been imposed on the information disclosed in post 372, and the screen includes a "confirm and display" button 382 and "cancel" button 383.

When the "confirm and display" button 382 has been selected by the user, a transition to the screen in Fig. 3 (j) occurs.

Fig. 3 (j) is a screen that displays the content of post 372, and includes a "reply" button 392 and a "return" button 393. When the "reply" button 392 has been selected by the user, a transition to the screen in Fig. 3 (k) occurs.

Fig. 3 (k) is a screen that enables the user to write a reply ("Reply") to post 372, and includes a title box 394, a text box 395, a "send reply" button 396, and a "return" button 397. When the user has filled in the text box and selected the "send reply" button 396, the reply is attached to post 372. Note that the reply post may only appear on the display of the user who wrote the reply post and the person who wrote post 372.

Fig. 4 is a flowchart of the subscription processing performed when a user subscribes to (registers with) the SNS, which allows a user type to be selected on the screen displayed on the client terminal 12 by the SNS server 10, displays that a confidentiality obligation has been imposed on information disclosed on SNS if a certain user type has been selected, and allows the user to approve or reject this obligation in accordance with the present embodiment of invention.

When the user launches a browser on the client terminal 12 and enters or is instructed to enter a URL (Uniform Resource Locator) indicating the SNS homepage, the SNS server 100 in the present embodiment of the invention displays the SNS homepage on the client terminal 12 (display unit) (S401). A "new subscription" button 304 is also displayed (S402). When "new subscription" is selected by the user (YES in S403), the subscribing unit 103 displays the subscription screen shown in Fig. 3 (b) (S404). A user type selecting unit 104 displays the user role selection pull-down menu 316 on the subscription screen (S405). When information has been entered in each portion of the subscription screen and the confirm button 317 has been pressed (YES in S406), it is determined from the user role selection pull-down menu whether a predetermined user type such as "IP consultant (patent attorney, etc.)" has been selected (S407). When a predetermined user type is selected (YES in S407), the confidentiality display screen shown in Fig. 3 (c) is displayed (S408). The confidentiality obligation acceptance/rejection selecting unit 105 also displays a consent check box 323 on the confidentiality obligation display screen (S409). When the consent check box 323 has been checked by the user and the "sign and register" button 324 has been pressed (YES in S410), an external authentication server such as a management server for digital certificates operated by the Japan Agency for Local Authority Information Systems (J-LIS) is called, and personal authentication using an "digital signature certificate" and an "electronic certificate for user certification" recorded on a personal number card is performed to digitally sign the agreement (S411). According to the Digital signatures and Authentication Business Act (Japanese Act No. 102 of 2000), electronic documents with digital signatures are presumed to have been genuinely established by the person in question (prepared according to the person's will), and this enhances the authenticity of the nondisclosure agreement.

When a digital signature is entered by the user (YES in S412), it is recorded in the database 202 along with the selected user type of the registered user (S413). Then, the SNS home screen 341 shown in Fig. 3 (e) is displayed (S414), and the subscription processing flow is ended. Note that if a specified user type is not selected in S407 (NO in S407), the registration procedure does not impose a confidentiality obligation (S415).

Fig. 5 is a flowchart of the bulletin board processing performed in which thread or list content posted on the SNS bulletin board is displayed to a user who has subscribed to the SNS as a predetermined user type such as "IP consultant (patent attorney, etc.)", and a message that a confidentiality obligation has been imposed is displayed when specified content is selected before the content is displayed.

When the user launches the browser on a client terminal 12 and enters or is instructed to enter the URL (Uniform Resource Locator) indicating the SNS homepage, the SNS server 100 in the present embodiment of the invention displays the SNS homepage on the client terminal 12 (display unit) (S501). When the bulletin board function has been selected by the user on the SNS homepage (YES in S502), the bulletin board list shown in Fig. 3 (f) is displayed (S503). When one of the bulletin boards has been selected by the user (YES in S504), the posted content of that bulletin board is displayed (S505). It is then determined whether or not the user is a predetermined type of user such as "IP consultant (patent attorney, etc.)" (S506). Posts that have been designated as confidential may be displayed as though they cannot be selected, for example, grayed out, or may not be displayed at all (S507) to users registered with a user type other than specified user types (No in S506).

When the user selects a post designated as confidential (YES in S508), the confidentiality warning screen in Fig. 3 (i) is displayed (S509). When the "confirm and display" button 382 has been selected by the user (YES in S510), the content of the post is displayed (S511). The fact that the post was disclosed to the user is recorded or outputted when appropriate along with date and time information (S512). A record indicating that the post was disclosed to the user may be made available to the poster when necessary. This makes it easy to verify how a secret was leaked and enhances the effectiveness of the confidentiality agreement.

When a reply post is made by the user (YES in S513), the original poster is notified (S514) or the reply post is displayed in list or thread posts on the bulletin board in a manner related to the original post (S515).

It is then determined whether or not an operation has been performed by the user (S516). If an end operation has been performed (YES in S517), the processing is ended.

When the administrator of the SNS manages the SNS, maintains and modifies the programs and databases, maintains the server, or moves data, the administrator may come to know content posted on SNS, but content confidentiality is not lost. This is because the SNS administrator is obliged to comply with the management policy displayed to users on the SNS. Here, "administrator" includes not only SNS operators, but also server administrators who install the SNS on external servers, and consignees to whom maintenance or modification of programs or databases has been outsourced. In this way, posters of content can view the original post and all replies without the confidentiality of the content being lost.

As explained above, the SNS in the present embodiment of the invention enables the posted content designated as confidential to be disclosed only to those who are obligated to keep it confidential. In this way, advice and proposals can be solicited on ideas and information included in the posted content without loss, for example, of "novelty", which is a requirement for a "patentable invention", or "confidentiality", which is a requirement for "trade secrets" under the Unfair Competition Prevention Act.

When a user accepts the confidentiality obligation, the user is personally authenticated and a digital signature is obtained. In this way, it becomes possible to accept the presumption that the consent is based on the person's will. This also enhances the effectiveness of the confidentiality.

In the present embodiment, the predetermined user type allowed to browse through posted content designated as confidential was an "IP consultant (patent attorney, etc.)". However, other types of users that are able to browse through posted content designated as confidential may be an "IT consultant (software engineer, etc.)", "design consultant", "prototype/mechanical design consultant", "marketing consultant", "legal consultant (lawyer, etc.)", or "tax consultant (tax accountant, etc.). In addition, the types of "confidentiality designations" may be subdivided according to what type of user is being solicited for advice. For example, tax-related issues may be disclosed only to users in the "tax consultant (tax accountant, etc.)" role (with consent to confidentiality). The type of "confidentiality designation" may be specified by the poster, or the type of "confidentiality designation" may be estimated based on the posted content using a technique such as machine learning. It may also be possible to specify two or more types of "confidentiality designation".

In the present embodiment, the confidentiality obligation was displayed before calling the external authentication server. However, the confidentiality obligation may be displayed simultaneously or integrally with a display screen from the external authentication server or the authentication procedure screen using a web programming technology called a "mashup". The external authentication server may also display the confidentiality obligation using an API provided by the SNS server 10. Here, the API (application programming interface) is a functional module that provides software functions based on the web (world wide web) to external hardware resources.

In the present embodiment, a new user who joins the SNS selects a user type and consents to confidentiality. However, there is essentially no difference in terms of processing or effect from new user registration when a user who has already subscribed and registered with another user type changes or adds a predetermined user type such as "IP consultant (patent attorney, etc.)", and this belongs to the scope of the present embodiment.

### (Second Embodiment)

In a second embodiment of the present invention, messages exchanged in a group chat are displayed on the SNS bulletin board so that only registered users who have consented to confidentiality can know the content, and display reply comments as messages in the group chat.

Fig. 6 shows examples of group chat screens displayed on a smartphone serving as a client terminal 12 by an SNS server 10 of the present invention. It should be noted that these screens are displayed on the display unit of the smartphone by the group chat application program on the smartphone referencing data from the SNS server 10.

When the group chat application is launched on the client terminal 12, a top screen like the one shown in 601 is displayed (Fig. 6 (a)).

The top screen 601 has a group chat function name 602, a search box 603, a home icon 604, a chat icon 605, a timeline icon 606, and other function icons 607. When activated using the chat function, a list of groups 608 to which the user belongs is displayed.

When one group (for example, "preparing for café opening") is selected from the list 608, a transition to the screen in FIG. 6 (b) occurs.

Fig. 6 (b) displays a chat room screen 611 that displays messages exchanged in the selected group in chronological order (timeline). Images, voice messages, videos, document files, schedules, and group meetings (video conferences, voice conferences), etc. can be displayed or called up on the chat room screen 611. Remarks by members of a group conference (video conference, audio conference) can also be displayed on the timeline.

When one of the messages on the chat room screen 611 has been selected by the user, a transition to the screen on Fig. 6 (c) occurs.

Fig. 6 (c) shows a menu of commands 622 that can be executed for the selected message. When the "advice" command is selected by the user, a transition to the screen in Fig. 6 (d) occurs.

Fig. 6 (d) is a screen for the user to edit messages and post them on the SNS bulletin board, and includes a title box 633, a text box 634, a "post to bulletin board" button 635, a "cancel" button 636, and a "convert to post" button 637. In the title box 633, a title generated from the original message is entered in an editable form. The original message selected by the user is also entered in the text box 634 in an editable form. When the user presses the "convert to post" button 637, a transition to the screen in Fig. 6 (e) occurs.

Fig. 6 (e) is the screen used to edit messages similar to the one in Fig. 6 (d). The original message has been converted and entered in the text box 634 in editable form to suit that of a bulletin board post (taking into account the messages before and after and the name of the chat room, etc.).

When the user selects the "post to bulletin board" button 635, a transition to the screen in Fig. 6 (f) occurs. Fig. 6 (f) is a screen that displays a list of bulletin boards that are candidates for the post, and includes a bulletin board list 652, a bulletin board check box 653, an "add bulletin board" button 654, a "post" button 655, and a "cancel" button 656.

When a bulletin board check box 653 has been checked by the user and the "post" button 655 selected, the post is posted on the checked bulletin board so that it can only be viewed by specific users who are obligated to maintain confidentiality.

Fig. 7 is a diagram showing that a post designated as confidential has been posted to the "Food Business Bulletin Board" from the "preparing for café opening" chat room. In Fig. 7, when post 702 is selected by a user registered as a predetermined user type such as an "IP consultant (patent attorney, etc.)", an alert regarding confidentiality is displayed as shown in Fig. 3 (i) and then the content of post 702 is displayed on the same screen as shown in Fig. 3 (j).

Fig. 8 is a flowchart of the operations performed to display group chat messages on a bulletin board as confidential posts, and display reply comments made by registered users who have accepted the confidentiality obligation as messages in the group chat.

When the group chat application is launched on a client terminal 12, the SNS server 10 references the group information and content information in the database 102 based on the user ID of the client terminal 12, and displays the top screen shown in Fig. 6a to the display unit of the client terminal 12 (S801).

When a group has been selected from the group list 608 (YES in S802), the SNS server 10 references the database 102 and displays content such as messages exchanged in the group in chronological order (S803).

When a message is selected by the user (YES in S804), a menu of commands that can be executed on the selected message is displayed (S805). When the "request advice" command is selected by the user (YES in S806), the posted message editing screen is displayed (S807). A title is generated from the original message (S808) and displayed in the title box of the posted message editing screen so that it can be edited by the user (S809). The original message is displayed in the text box of the posted message editing screen so that it can also be edited by the user (S810).

When the user presses the "convert to Post" button (YES in S811), the original message is converted using a technique such as machine learning by referencing the messages before and after and the name of the chat room so that it is suitable for posting on a bulletin board where advice is sought (S812).

When the "post to bulletin board" button is selected by the user (YES in S813), a list of candidate bulletin boards for the post is displayed as shown in Fig. 6 (f) (S814). The bulletin boards that are candidates for posting destinations are estimated based on the posting history of the user and the content of the posted text.

When the user selects a bulletin board for the post and issues a "post" instruction (YES in S815), the message is posted and displayed on the selected bulletin board so that only specific users who are obligated to maintain confidentiality can view it (S816). The post is monitored to determined whether or not it has been viewed by a specific user with a confidentiality obligation (S817). When the post has been viewed (YES in S817), the user of the group chat is sent information about browsing users, for example, "x people have viewed this post" (S818). When a reply is made (YES in S819), the reply is displayed in the chat room of the group chat (S820).

It is then determined whether an operation has been performed by the user (S821). When a predetermined ending operation has been performed such as "close the chat room" or "delete the post" (YES in S822), the processing in the flow is ended.

As explained above, the SNS in the present embodiment of the present invention displays messages exchanged in group chats on the SNS bulletin board so that only registered users who have consented to confidentiality can know the contents, and displays reply comments made to the message in the group chat. In this way, advice can be received from experts outside the group on ideas and information exchanged between group members without loss of, for example, "novelty" or "confidentiality". Because reply comments made to the bulletin board are displayed as group chat messages continuously or integrally as interactions within the group, advice can be digested, shared, and utilized as a group based on the context (message flow).

### (Other Embodiments)

Fig. 9 is an example of display screens from an SNS that specializes in "invention consultation."

Fig. 9 (a) is the top screen displayed to users who are not logged in to the SNS for invention consultation, and includes a "login" button 911, a "general user registration" button 912, and a "patent attorney registration" button 913.

When the user presses the "general user registration" button 912 or the "patent attorney registration button 913", the screen transitions to the subscription screen shown in Fig. 3 (b). Here, an item corresponding to the user role selection pull-down menu 316 is omitted. This is because the user role has already been selected based on whether the "general user registration " button 912 or the "patent attorney registration" button 913 has been pressed. When required information has been entered and operations performed on the subscription screen, a transition to the screen shown in Fig. 9 (b) occurs.

Fig. 9 (b) is a personalized page (front page) to which a general user is redirected after logging in, and includes a "previous invention consultations" button 921, a "new invention consultation" text box 922, a "post" button 923, and a "clear" button 924.

When the "previous invention consultations" button 921 is pressed, invention consultations that the user has made and the replies to these consultations are displayed. When text is added to the "new invention consultation" text box 922 and the "post" button 923 is pressed, a post is created so that only patent attorney users who are obligated to maintain confidentiality can view it.

In Fig. 9 (a), when a patent attorney user presses the "patent attorneys only registration" button 913, a transition to the subscription screen as shown in Fig. 3 (b) occurs. However, an item corresponding to the user role selection pull-down menu 316 is omitted. The patent attorney subscription screen may have a field for entering the patent attorney's registration number. This is a convenient way of confirming whether the patent attorney is registered.

When required information has been entered and operations performed on the subscription screen, a transition to the screen shown in Fig. 9 (c) occurs after passing through the screen for selecting whether to accept or reject the confidentiality obligation as shown in Fig. 3 (c).

Fig. 9 (c) is a personalized page (front page) for a user logged in with the patent attorney role, which displays a list 931 of "invention consultations" posted on the SNS. Fig. 9 (c) also has a display order dropdown menu 932 for indicating the display order on the list, a search box 933, and a "search" button 934.

The invention consultation list 931 displays the "invention consultations" composed and posted in the new invention consultation text box 922 by general users in the order specified in the display order dropdown menu 932. Searched, retrieved and displayed content that has been designated as confidential posts may be displayed so that they are disclosed only to "IP consultants" on other SNS (other websites) operated under the same terms.

Because all of the posts displayed on the invention consultation list 931 are "invention consultations" for which advice is sought from patent attorney users, the patent attorney users do not have to search for the posts seeking advice on multiple bulletin boards as shown in Fig. 3 (f) or multiple posts posted on each bulletin board, which is convenient.

When a post listed on the invention consultation list 931 is selected by a patent attorney user, the screen transitions to Fig. 9 (d) via a screen reminding the attorney of the confidentiality obligation as shown in Fig. 3 (i). Fig. 9 (d) is a screen used to display the content of a post and write a reply to it, and includes a "consultation issue" text box 941, a "reply" text box 942, and a "do not let others see the details of this consultation" check box 943.

The "keep others from seeing the consultation content" check box 943 is used to issue an instruction to keep an invention consultation reply from being displayed on the invention consultation list of other patent attorney users indefinitely or for a certain period of time. This check box encourages patent attorney users to reply early to posts that do not have a reply.

Data processing may be performed to charge the patent attorney user (or deduct points) at the stage when the content of the invention consultation post is displayed to the patent attorney user, or when the reply is sent. This makes it possible to turn a profit while suppressing unscrupulous content and replies.

Other types of SNS that allow for confidential posts of consultation details include those for "IT consulting", "design consulting", "prototype/mechanical design consulting", "marketing consulting", "legal consulting", and "tax consulting". For example, Fig. 10 is an example of display screens from an SNS that specializes in "tax consultation."

In these cases, an SNS (web site) specializing in each field can be used as a posting destination for messages exchanged in group chats as described in the second embodiment.

For example, SNS (WEB sites) specializing in each field can be displayed as candidates for post destinations as displayed in Fig. 6 (f). For example, the invention consultation shown in Fig. 6 (e) is posted on an SNS specializing in the IP consulting field as shown in Fig. 9, and the reply is accepted from the patent attorney users who are registered there.

In this way, professional advice on items in a group chat can be received from specialists in various fields on SNS specializing in each field without losing "novelty" or "confidentiality". Also, experts in each field can approach potential customers at any time by registering on an SNS with the consent to an obligation of confidentiality.

The information processing devices in the embodiments of the present invention do not have to consist of an integrated hardware or software, and may assume various forms depending on the intended application. For example, an API provided to display a confidentiality screen from an external authentication server and media carrying the API constitute information processing devices of the present invention. Also, in bulletin board systems (bulletin board services) and group chat systems (group chat services) that operate independently from each other, an API and the medium supporting it constitute information processing devices of the present invention when it is possible to post from the group chats to the bulletin boards and reply from the bulletin boards to the group chats using the API.

The present invention can also be realized by supplying a program that realizes one or more functions of the embodiment described above to a system or device via a network or supporting medium so that one or more processors in a computer in the system or device can retrieve and execute the program. One or more of the functions can also be realized by a circuit (such as an application-specific integrated circuit or ASIC).

The present invention is not limited to the embodiments described above, and various modifications and alterations are possible without departing from the scope of the present invention in accordance to the appended claims.

### [Key to the Drawings]

10: SNS server
101: CPU
102: ROM
103: RAM
104: Bus
105: Input/output interface
106: Display unit
107: Operation receiving unit
108: Storage unit
109: Communication unit
11: Network
12: Client terminal
201: SNS generating unit
202: Database
203: Subscribing unit
204: User type selecting unit
205: Confidentiality acceptance/rejection selecting unit

## Claims

1. An information processing method for providing a social networking service (SNS) via a network, the information processing method comprising:
providing a subscribing means for adding user subscriptions to an SNS;
providing a confidentiality acceptance/rejection selecting means for accepting or rejecting a confidentiality obligation imposed on information disclosed on the SNS when the subscribing means is used to add a subscription,
performing information processing enabling the display of messages posted on the SNS, in whole or in part, only to the administrator of the SNS, to the poster of the message, and to registered users who have consented to the fact that confidentiality has been imposed via the confidentiality acceptance/rejection selecting means,
providing a group chat means for exchanging messages between members constituting a group,
displaying, on a SNS bulletin board, messages exchanged via the group chat means, in whole or in part, only to registered users who have consented to the fact that confidentiality has been imposed on information using the confidentiality acceptance/rejection selecting means, and
displaying comments made in response to the messages displayed on the SNS bulletin board as messages via the group chat means.

2. A program causing a computer to function as each of the means in the information processing method according to claim 1.

3. A computer-readable supporting medium storing a program that causes a computer to function as each of the means in the information processing method according to claim 1.

## Patentansprüche

1. Informationsverarbeitungsverfahren zum Bereitstellen eines sozialen Netzwerkdienstes (SNS) über ein Netzwerk, wobei das Informationsverarbeitungsverfahren umfasst:
Bereitstellen eines Abonniermittels zum Hinzufügen von Benutzerabonnements zu einem SNS; Bereitstellen eines Vertraulichkeitsannahme-/Ablehnungsauswahlmittels zum Annehmen oder Ablehnen einer Vertraulichkeitsverpflichtung, die Informationen auferlegt wird, die im SNS offengelegt werden, wenn das Abonniermittel verwendet wird, um ein Abonnement hinzuzufügen,
Durchführen von Informationsverarbeitung, welche die Anzeige von Nachrichten ermöglicht, die im SNS gepostet werden, vollständig oder zum Teil, nur für den Administrator des SNS, für den Poster der Nachricht, und für registrierte Nutzer, die der Tatsache zugestimmt haben, dass Vertraulichkeit anhand des Vertraulichkeitsannahme-/Ablehnungsauswahlmittels auferlegt worden ist,
Bereitstellen eines Gruppen-Chat-Mittels zum Austauschen von Nachrichten zwischen Mitgliedern, die eine Gruppe darstellen,
Anzeigen auf einer SNS-Pinnwand von Nachrichten, die über das Gruppen-Chat-Mittel ausgetauscht werden, vollständig oder zum Teil, nur für registrierte Nutzer, die der Tatsache zugestimmt haben, dass Vertraulichkeit für Informationen unter Verwendung des Vertraulichkeitsannahme-/Ablehnungsauswahlmittels auferlegt worden ist, und Anzeigen von Kommentaren, die als Reaktion auf die auf der SNS-Pinnwand angezeigten Nachrichten als Nachrichten über das Gruppen-Chat-Mittel.

2. Programm, das einen Computer veranlasst, als jedes der Mittel im Informationsverarbeitungsverfahren nach Anspruch 1 zu fungieren.

3. Computerlesbares Trägermedium, das ein Programm speichert, das einen Computer veranlasst, als jedes der Mittel im Informationsverarbeitungsverfahren nach Anspruch 1 zu fungieren.

## Revendications

1. Procédé de traitement d'informations pour fournir un service de réseautage social (SNS) via un réseau, le procédé de traitement d'informations comprenant :
la fourniture d'un moyen d'abonnement pour ajouter des abonnements utilisateurs à un SNS ; la fourniture d'un moyen de sélection d'acceptation/rejet de confidentialité pour accepter ou rejeter une obligation de confidentialité imposée sur des informations divulguées sur le SNS lorsque le moyen d'abonnement est utilisé pour ajouter un abonnement,
la réalisation d'un traitement d'informations permettant l'affichage des messages postés sur le SNS, en totalité ou en partie, uniquement à l'administrateur du SNS, à l'expéditeur du message, et aux utilisateurs enregistrés qui ont consenti au fait que la confidentialité a été imposée via le moyen de sélection d'acceptation/rejet de confidentialité,
la fourniture d'un moyen de discussion en groupe pour échanger des messages entre des membres constituant un groupe,
l'affichage, sur un forum SNS, de messages échangés via le moyen de discussion en groupe, en totalité ou en partie, uniquement à des utilisateurs enregistrés qui ont consenti au fait que la confidentialité a été imposée sur des informations en utilisant le moyen de sélection d'acceptation/rejet de confidentialité, et l'affichage de commentaires faits en réponse aux messages affichés sur le forum SNS sous forme de messages via le moyen de discussion en groupe.

2. Programme amenant un ordinateur à fonctionner comme chacun des moyens dans le procédé de traitement d'informations selon la revendication 1.

3. Milieu de support lisible par ordinateur contenant un programme qui amène un ordinateur à fonctionner comme chacun des moyens dans le procédé de traitement d'informations selon la revendication 1.
